(19) **Europäisches Patentamt**

**European Patent Office**

**Office européen des brevets**

(11) Veröffentlichungsnummer: **0 294 753 B1**

(12) **EUROPÄISCHE PATENTSCHRIFT**

(45) Veröffentlichungstag der Patentschrift: **16.03.94**

(51) Int. Cl.5: **C01B 33/20**

(21) Anmeldenummer: **88109030.2**

(22) Anmeldetag: **07.06.88**

(54) **Organisch substituierte Ammoniumsilikate und Verfahren zu ihrer Herstellung.**

(30) Priorität: **11.06.87 DE 3719467**

(43) Veröffentlichungstag der Anmeldung:
**14.12.88 Patentblatt 88/50**

(45) Bekanntmachung des Hinweises auf die
Patenterteilung:
**16.03.94 Patentblatt 94/11**

(84) Benannte Vertragsstaaten:
**BE DE FR GB IT NL**

(56) Entgegenhaltungen:
**EP-A- 0 002 079**
**EP-A- 0 175 287**
**GB-A- 1 087 062**
**US-A- 3 941 871**

**Advances in Colloid and Interface Science,**
**11 (1979) 105-129**

(73) Patentinhaber: **HOECHST AKTIENGESELL-
SCHAFT**

**D-65926 Frankfurt(DE)**

(72) Erfinder: **Rieck, Hans-Peter, Dr.
Staufenstrasse 13a
D-6238 Hofheim am Taunus(DE)**
Erfinder: **Schott, Martin, Dr.
Königsteiner Strasse 7
D-6374 Steinbach(DE)**
Erfinder: **Hanauer, Johann Franz, Dr.
Kreuzheck 4
D-6239 Eppstein/Taunus(DE)**

**Beschreibung**

Die vorliegende Erfindung betrifft ein Verfahren zur Herstellung von organisch substituierten Ammoniumsalzen, die sich von einer kristallinen Kieselsäure mit Schichtstruktur ableiten.

Die Erfindung beruht auf der Erkenntnis, daß Salze von Schichtkieselsäuren, die langkettige organische Kationen enthalten, in der Lage sind, organische Gastmoleküle reversibel aufzunehmen und daher zum Aufsaugen und Unschädlichmachen von Ölen, insbesondere solchen mit langkettigen Alkylgruppen geeignet sind.

Gemäß EP-A-175 287 sind devart modifizierte hochkondensierte Schichtsilikate und deren Verwendung als Waschmitteladditive bekannt.

Gegenstand der Erfindung sind organisch substituierte Ammoniumsalze einer kristallinen Kieselsäure mit Schichtstruktur der Formel $H_2Si_2O_5$, dadurch gekennzeichnet, daß es sich um Verbindungen der Formel

$$(Q_xM_yH_z)_2Si_2O_5 \bullet m\ H_2O\ \text{handelt},$$

wobei

m  eine Zahl von 0 bis 10,
z  eine Zahl kleiner als 1,
y  eine Zahl kleiner als 1 und
x  eine Zahl kleiner als 1 und größer als 0 bedeuten,
die Summe $(x + y + z) = 1$ ist,
M  für $Li^+$, $Na^+$, $K^+$ oder $NH_4^+$ steht,
Q  ein Kation der allgemeinen Formel $(NR^1R^2R^3R^4)^+$ darstellt
in der
$R^1$ und $R^2$  unahhängig voneinander Alkylreste mit 6 bis 20 C-Atomen,
$R^3$ und $R^4$  unabhängig voneinander Wasserstoff, Alkylreste mit 1 bis 22 C-Atomen, Hydroxyalkylreste mit 2 bis 20 C-Atomen, Benzyl, Alkoxyethylreste mit 1 bis 20 C-Atomen in der Alkoxygruppe, Alkylphenoxyethylreste mit 1 bis 10 C-Atomen in der Alkylgruppe oder Alkylarylreste mit 1 bis 10 C-Atomen in der Alkylgruppe (insbesondere Alkylphenylreste),
bedeuten.

Diese organisch substituierten Ammoniumsalze einer kristallinen Kieselsäure mit Schichtstruktur lassen sich gewinnen durch Umsetzung von Alkalisalzen einer kristallinen Kieselsäure mit Schichtstruktur in wässriger Phase mit Salzen eines aliphatischen Amins oder einer quaternären Ammoniumbase. Bei der Umsetzung mit Salzen aliphatischer Amine setzt man eine Formeleinheit eines kristallinen Alkalischichtsilikates der allgemeinen Formel

$$M_2Si_2O_5$$

mit 0,2 bis 20 Mol, vorzugsweise 0,5 bis 7 Mol eines Salzes eines sekundären oder tertiären aliphatischen Amins um, wobei M für Natrium, Kalium oder Ammonium steht. Insbesondere kann man ein Salz der Formel $(NR^1R^2R^3H)^+X^-$ einsetzen, wobei $R^1$, $R^2$ und $R^3$ die oben angegebene Bedeutung aufweisen und X ein Anion darstellt. Welches Anion das Aminsalz bildet, ist ohne Bedeutung. Die handelsüblichen Aminsalze liegen häufig als Chloride vor. Es kommen jedoch auch andere Anionen in Frage, wie z.B. Bromid, Methosulfat, Acetat oder Propionat. Am besten erfolgt die Umsetzung in wässriger Lösung bei pH-Werten von 7 bis 10, vorzugsweise 8 bis 9.

Die als Ausgangsmaterial dienenden kristallinen Alkalidisilikate der Formel $M_2Si_2O_5$ sind bekannt. Beispielsweise gibt es mehrere Schichtsilikate mit der ungefähren Zusammensetzung $Na_2Si_2O_5$, ($\alpha$, $\beta$, $\gamma$, $\delta$-), die sich durch ihre Röntgenbeugungsdiagramme unterscheiden. So wird in der DE-OS 34 17 649 ein technisch gangbarer Weg zur Herstellung röntgenographisch unterschiedlicher Formen dieser Substanz beschrieben. Das dort beschriebene Produkt mit dem Röntgenbeugungsdiagramm des $\alpha$-$Na_2Si_2O_5$ wird hier als NaSKS-5 und die dort beschriebene Substanz mit dem Röntgenbeugungsdiagramm des $\delta$-$Na_2Si_2O_5$ wird hier als NaSKS-6 bezeichnet.

Für die Gewinnung eines Salzes einer quaternären Base setzt man eine Formeleinheit eines kristallinen Alkalischichtsilikates der allgemeinen Formel $M_2Si_2O_5$ mit 0,2 bis 20 Mol, vorzugsweise 0,5 bis 7 Mol eines quaternären Ammoniumsalzes der Formel $(NR^1R^2R^3R^4)^+X^-$, wobei $R^1$, $R^2$, $R^3$, $R^4$ und X die oben angegebene Bedeutung aufweisen, um. Vorzugsweise stellen alle 4 Substituenten ($R^1$, $R^2$, $R^3$, $R^4$) Alkylgruppen dar.

2

Es ist bevorzugt, daß $R^3$ und $R^4$ unabhängig voneinander Alkylreste mit 1 bis 4 C-Atomen darstellen. Es ist ferner bevorzugt, wenn die Reste $R^3$ und $R^4$ Methylgruppen bedeuten. Besonders günstig verhalten sich Ammoniumsalze der Formel $(NR^1{}_2R^3{}_2)^+X^-$.

Anstatt - wie oben beschrieben - die Alkalisalze einer kristallinen Kieselsäure mit Schichtstruktur mit dem Salz eines sekundären oder tertiären aliphatischen Amins umzusetzen, ist es auch möglich, die freie kristalline Kieselsäure mit Schichtstruktur einzusetzen. Bei diesem Verfahren wird eine Formeleinheit einer kristallinen Kieselsäure mit Schichtstruktur der allgemeinen Formel $H_2Si_2O_5$ mit 0,2 bis 20, vorzugsweise 0,5 bis 7 Mol eines freien sekundären oder tertiären aliphatischen Amins umgesetzt. Die hier eingesetzten freien Kiselsäuren werden aus ihren Alkalisalzen durch Ansäuern und anschließendes Waschen mit Wasser gewonnen.

Das eingesetzte Amin weist die Formel $NR^1R^2R^3$ auf, wobei $R^1$, $R^2$ und $R^3$ die oben angegebene Bedeutung besitzen.

Um ein reines Produkt zu gewinnen, ist es in allen Fällen sinnvoll, insbesonderes aber bei der Umsetzung eines Alkalischichtsilikates mit dem Salz eines sekundären oder tertiären aliphatischen Amins, das Rohprodukt mit einem organischen Lösungsmittel auszuwaschen, um adsorbiertes organisches Ausgangsprodukt zu entfernen.

Bei den erfindungsgemäß hergestellten Aminsalzen von schichtförmigen Disilikaten befinden sich Organoammoniumionen zwischen den Silikatschichten und sind an diese salzartig gebunden. Bei ihrem Einbau treten sie durch Ionenaustausch an die Stelle der im Schichtsilikat ursprünglich vorhandenen Alkalimetall- oder Wasserstoffionen. Dieser Austausch ist nicht immer vollständig, da der Platzbedarf insbesondere großer Organoammoniumionen dem Einbau Grenzen setzt. Hier erhält man zunächst nur teilsubstituierte Produkte wie $(N(CH_3)_2(C_{16}H_{33})_2)_{1,5}Na_{0,5}Si_2O_5$. Der Einbau der Organoammoniumionen führt zu einer Aufweitung des Schichtgitters. Dieser Effekt kann durch Röntgenbeugungsaufnahmen erkannt werden.

Die so hergestellten Salze von Schichtsilikaten können noch weitere organische Moleküle aufnehmen. Dabei kann es sich z.B. um ein als Ausgangsmaterial verwendetes Aminsalz handeln. Dieser Effekt ist besonders dann zu erwarten, wenn Organoammoniumsalze mit ein oder zwei langkettigen Resten verwendet wureden. Weiteres Ausgangsmaterial kann auch adsorptiv gebunden werden. Dies wird dann der Fall sein, wenn das als Ausgangsmaterial verwendete Aminsalz stöchiometrisch im Überschuß eingesetzt wird.

Die erfindungsgemäß hergestellten Aminsalze von schichtförmigen Disilikaten besitzen auch die Fähigkeit, Öle und Fette zu adsorbieren. Diese Fähigkeit machen die erfindungsgemäß hergestellten Aminsalze geeignet als Waschmittelzusatz.

Die Erfindung wird durch die Beispiele näher erläutert.

**Beispiel 1**

54 g Na-SKS-6 (= 297 mmol) werden in 500 ml Wasser aufgeschlämmt. Diese Aufschlämmung wird durch Zugabe von Salzsäure auf pH 10 eingestellt. Bei 65°C werden unter Rühren innerhalb 1 Stunde 33 g (= 44 mmol) einer 75 %igen Paste von Distearyldimethylammoniumchlorid in Isopropanol zugegeben. Daß weiße Umsetzungsprodukt wird abfiltriert, kurz mit Wasser gewaschen und anschließend bei 50°C im Vakuum getrocknet.

Wie sich aus dem Röntgenbeugungsdiagramm des Produkts ergibt, weist dieses mit d-Werten von $41 \cdot 19^{-8}$ cm und $24 \cdot 10^{-8}$ cm Gitterabstände auf, die weit über denen des $\delta$-$Na_2Si_2O_5$ liegen und nur durch eine Schichtaufweitung erklärbar sind, die durch die Aminsalzbildung verursacht wird.

Das Filtrat enthält weniger als 20 mg Distearyldimethylammoniumchlorid, das sind unter 0,1 % des eingesetzten Materials.

**Beispiel 2**

5 g Na-SKS-6 (= 27 mmol) werden in 800 ml Wasser aufgeschlämmt. Nach Erhitzen dieser Aufschlämmung auf 65°C werden unter kräftigem Rühren 20 g eines 96 %igen Pulvers von Distearyldimethylammoniumchlorid (= 34 mmol) innerhalb 1 Stunde zugegeben. Nach Beendigung der Zugabe wird das Gemisch noch 1 Stunde gerührt. Das abfiltrierte, mit wenig Wasser gewaschene, im Vakuum bei 50°C getrocknete Produkt ist ein weißes Pulver. Sein Röntgenbeugungsdiagramm weist ähnlich wie bei Beispiel 1 d-Werte von 24,2 und $46,5 \cdot 10^{-8}$ cm auf, die nur durch eine Schichtaufweitung, d.h. durch Aminsalzbildung erklärbar sind.

Das Filtrat enthält noch 150 mg Distearyldimethylammoniumchlorid, das sind 0,8 % des eingesetzten Materials. Das bedeutet, daß praktisch die gesamte Menge an quaternären Ammoniumionen nach der Umsetzung im abfiltrierten Festprodukt vorliegt, sei es als Aminsalz des Disilicates, sei es als eingelagertes oder adsorbiertes Distearyldimethylammoniumchlorid.

**Beispiel 3**

4,9 g des im Beispiel 2 hergestellten Produktes werden unter Zugabe von 2,9 g $Na_2CO_3$ in 1 l Wasser aufgeschlämmt. Diese Aufschlämmung wird auf 60°C erwärmt. Dann werden unter Rühren 5 ml = 4,6 g Sonnenblumenöl langsam zugegeben. Das Rühren wird 30 min fortgesetzt. Die heiße Dispersion wird zentrifugiert. Nach dem Zentrifugieren wird die überstehende Lösung mit dem darauf schwimmenden überschüssigen Öl abdekantiert und nach Abkühlen auf Raumtemperatur dreimal mit 100 ml Cyclohexan extrahiert. Der mit $Na_2SO_4$ getrocknete und filtrierte Extrakt wird eingedampft. Der Rückstand entspricht dem nicht adsorbierten Öl. Es werden 2,15 g Öl gefunden. Das bedeutet, daß 2,45 g Sonnenblumenöl von dem im Beispiel 2 hergestellten Produkt adsorbiert wurden, was 50 Gew.-%, bezogen auf dieses Produkt, entspricht.

**Beispiel 4**

5 g Na-SKS 5 (= 27 mmol) werden in 800 ml Wasser aufgeschlämmt. Zu dieser Aufschlämmung werden unter kräftigem Rühren 15 g pulverförmiger Distearyldimethylammoniumchlorid mit 96 % Wirkstoff (= 26 mmol) innerhalb 12 Stunden zugegeben. Das abfiltrierte, mit wenig Wasser gewaschene und im Vakuum bei 50°C getrocknete Produkt ist ein weißes Pulver. Sein Röntgenbeugungsdiagramm weist folgende Peaks auf:

| d-Wert ($10^{-8}$ cm) | I |
|---|---|
| 4,15 | 45 |
| 4,39 | 50 |
| 15,36 | 20 |
| 22,6 | 10 |
| 44,1 | 100 |

Die drei höheren d-Werte sind aus der Schichtaufweitung zu deuten, die durch den Einbau der Organoammoniumionen verursacht wurde (der höchste d-Wert von NaSKS-5 beträgt $4,9 \cdot 10^{-8}$ cm).

**Patentansprüche**

1. Organisch substituierte Ammoniumsalze einer kristallinen Kieselsäure mit Schichtstruktur der Formel $H_2Si_2O_5$, dadurch gekennzeichnet, daß es sich um Verbindungen der Formel

$(Q_xM_yH_z)_2Si_2O_5 \cdot m\ H_2O$ handelt,

wobei
    m       eine Zahl von 0 bis 10,
    z       eine Zahl kleiner als 1,
    y       eine Zahl kleiner als 1 und
    x       eine Zahl kleiner als 1 und größer als 0 bedeuten,
die Summe $(x + y + z) = 1$ ist,
    M      für $Li^+$, $Na^+$, $K^+$ oder $NH_4^+$ steht,
    Q      ein Kation der allgemeinen Formel $(NR^1R^2R^3R^4)^+$ darstellt
in der
    $R^1$ und $R^2$      unabhängig voneinander Alkylreste mit 6 bis 20 C-Atomen,
    $R^3$ und $R^4$      unabhängig voneinander Wasserstoff, Alkylreste mit 1 bis 22 C-Atomen, Hydroxyalkylreste mit 2 bis 20 C-Atomen, Benzyl, Alkoxyethylreste mit 1 bis 20 C-Atomen in der Alkoxygruppe, Alkylphenoxyethylreste mit 1 bis 10 C-Atomen in der Alkylgruppe oder Alkylarylreste mit 1 bis 10 C-Atomen in der Alkylgruppe,
bedeuten.

**2.** Verfahren zur Herstellung von organisch substituierten Ammoniumsalzen einer kristallinen Kieselsäure mit Schichtstruktur nach Anspruch 1 durch Umsetzen von Alkalisalzen dieser Kieselsäure in wässriger Phase mit Salzen aliphatischer Amine, dadurch gekennzeichnet, daß man eine Formeleinheit eines kristallinen Alkalischichtsilikats der allgemeinen Formel $M_2Si_2O_5$ mit 0,2 bis 20 Mol, vorzugsweise 0,5 bis 7 Mol eines Salzes eines sekundären oder tertiären aliphatischen Amins umsetzt, wobei M die in Anspruch 1 angegebene Bedeutung hat.

**3.** Verfahren nach Anspruch 2, dadurch gekennzeichnet, daß man ein Salz der Formel $(NR^1R^2R^3H)^+ X^-$ einsetzt wobei $R^1$, $R^2$ und $R^3$ die in Anspruch 1 angegebene Bedeutung aufweisen und X ein Anion darstellt.

**4.** Verfahren nach Anspruch 2, dadurch gekennzeichnet, daß man die Umsetzung in wässriger Lösung bei pH-Werten von 7 bis 10 durchführt.

**5.** Verfahren zur Herstellung organisch substituierter Ammoniumsalze einer kristallinen Kieselsäure mit Schichtstruktur nach Anspruch 1 durch Umsetzen von Alkalisalzen einer kristallinen Kieselsäure mit Schichtstruktur in wässriger Phase mit dem Salz einer quaternä ren Ammoniumbase, dadurch gekennzeichnet, daß man eine Formeleinheit eines kristallinen Alkalischichtsilicats der allgemeinen Formel $M_2Si_2O_5$ mit 0,2 bis 20 Mol, vorzugsweise 0,5 bis 7 Mol eines quaternä ren Ammoniumsalzes, das im Molekül 4 aliphatische Substituenten enthält, umsetzt, wobei M die in Anspruch 1 angegebene Bedeutung hat.

**6.** Verfahren nach Anspruch 5, dadurch gekennzeichnet, daß das eingesetzte quaternä re Ammoniumsalz die Formel $(NR^1R^2R^3R^4)^+ X^-$ aufweist, wobei $R^1$, $R^2$, $R^3$ und $R^4$ die in Anspruch 1 angegebenen aliphatische Rest sind und X ein Anion darstellt.

**7.** Verfahren nach Anspruch 6, dadurch gekennzeichnet, daß $R^3$ und $R^4$ unabhängig voneinander Alkylreste mit 1 bis 4 C-Atomen darstellen.

**8.** Verfahren nach Anspruch 7, dadurch gekennzeichnet, daß das eingesetzte Ammoniumsalz die Formel $(NR^1_2R^3_2)^+ X^-$ auweist.

**9.** Verfahren nach Anspruch 6, dadurch gekennzeichnet, daß $R^3$ und $R^4$ Methylgruppen bedeuten.

**10.** Verfahren zur Herstellung organisch substituierter Ammoniumsalze einer kristallinen Kieselsäure mit Schichtstruktur nach Anspruch 1, dadurch gekennzeichnet, daß man eine Formeleinheit einer kristallinen Kieselsäure mit Schichtstruktur der allgemeinen Formel $H_2Si_2O_5$ mit 0,2 bis 20, vorzugsweise 0,5 bis 7 Mol eines freien sekundären oder tertiären aliphatischen Amins umsetzt.

**11.** Verfahren nach Anspruch 10, dadurch gekennzeichnet, daß das eingesetzte Amin die Formel $NR^1R^2R^3$ aufweist, wobei $R^1$, $R^2$ und $R^3$ die in Anspruch 1 angegebene Bedeutung aufweisen.

**12.** Verfahren nach Anspruch 2, dadurch gekennzeichnet, daß man das erhaltene Reaktionsprodukt mit einem organischen Lösungsmittel auswäscht, um adsorbiertes freies sekundäres oder tertiäres aliphatisches Amin zu entfernen.

**13.** Verfahren nach Anspruch 2 oder 5, dadurch gekennzeichnet, daß das Umsetzungsprodukt, das gegebenenfalls überschüssiges Ausgangsmaterial enthält, abgetrennt, mit Wasser gewaschen und, vorzugsweise im Vakuum, getrocknet wird.

**14.** Verwendung der organisch substituierten Ammoniumsalze und gemäß Anspruch 1 als ölbindende Substanzen.

**15.** Organisch substituiertes Ammoniumsalz einer kristallinen Kieselsäure mit Schichtstruktur gemäß Anspruch 1, dadurch gekennzeichnet, daß x eine Zahl zwischen 0,1 und 0,8, insbesondere zwischen 0,15 und 0,6, vorzugsweise 0,3 und 0,4 ist.

**Claims**

1.  Ammonium salts, substituted by organic substituents, of a crystalline silicic acid having a laminar structure of the formula $H_2Si_2O_5$, which is a compound of the formula

    $(Q_xM_yH_z)_2Si_2O_5 \cdot m\, H_2O$

    in which
    m    is a number from 0 to 10,
    z    is a number less than 1,
    y    is a number less than 1 and
    x    is a number less than 1 and greater than 0,
    the sum $(x + y + z)$ is 1,
    M    is $Li^+$, $Na^+$, $K^+$ or $NH_4{}^+$, and
    Q    is a cation of the formula $(NR^1R^2R^3R^4)^+$
    in which
    $R^1$ and $R^2$    independently of one another are alkyl radicals having 6 to 20 carbon atoms, and
    $R^3$ and $R^4$    independently of one another are hydrogen, alkyl radicals having 1 to 22 carbon atoms, hydroxyalkyl radicals having 2 to 20 carbon atoms, benzyl, alkoxyethyl radicals having 1 to 20 carbon atoms in the alkoxy group, alkylphenoxyethyl radicals having 1 to 10 carbon atoms in the alkyl group or alkylaryl radicals having 1 to 10 carbon atoms in the alkyl group.

2.  A process for the preparation of ammonium salts, substituted by organic substituents, of a crystalline silicic acid having a laminar structure as claimed in claim 1 by reaction of alkali metal salts of this silicic acid with salts of aliphatic amines in the aqueous phase, which comprises reacting one formula unit of a crystalline alkali metal laminar silicate of the formula
    $M_2Si_2O_5$ with 0.2 to 20 mol, preferably 0.5 to 7 mol, of a salt of a secondary or tertiary aliphatic amine, in which M has the meaning given in claim 1.

3.  The process as claimed in claim 2, wherein a salt of the formula $(NR^1R^2R^3H)^+X^-$ in which $R^1$, $R^2$ and $R^3$ have the meaning given in claim 1 and X is an anion is employed.

4.  The process as claimed in claim 2, wherein the reaction is carried out in aqueous solution at a pH of 7 to 10.

5.  A process for the preparation of ammonium salts, substituted by organic substituents, of a crystalline silicic acid having a laminar structure as claimed in claim 1 by reaction of alkali metal salts of a crystalline silicic acid having a laminar structure with the salt of a quaternary ammonium base in the aqueous phase, which comprises reacting one formula unit of a crystalline alkali metal laminar silicate of the formula $M_2Si_2O_5$ with 0.2 to 20 mol, preferably 0.5 to 7 mol, of a quaternary ammonium salt which contains 4 aliphatic substituents in the molecule, in which M has the meaning given in claim 1.

6.  The process as claimed in claim 5, wherein the quaternary ammonium salt employed has the formula $(NR^1R^2R^3R^4)^+X^-$ in which $R^1$, $R^2$, $R^3$ and $R^4$ are the aliphatic radicals mentioned in claim 1 and X is an anion.

7.  The process as claimed in claim 6, wherein $R^3$ and $R^4$ independently of one another are alkyl radicals having 1 to 4 carbon atoms.

8.  The process as claimed in claim 7, wherein the ammonium salt employed has the formula $(NR^1{}_2R^3{}_2)^+X^-$.

9.  The process as claimed in claim 6, wherein $R^3$ and $R^4$ are methyl groups.

10. A process for the preparation of ammonium salts, substituted by organic substituents, of a crystalline silicic acid having a laminar structure as claimed in claim 1, which comprises reacting one formula unit of a crystalline silicic acid having a laminar structure of the formula $H_2Si_2O_5$ with 0.2 to 20, preferably 0.5 to 7, mol of a free secondary or tertiary aliphatic amine.

11. The process as claimed in claim 10, wherein the amine employed has the formula $NR^1R^2R^3$, in which $R^1$, $R^2$ and $R^3$ have the meaning given in claim 1.

12. The process as claimed in claim 2, wherein the reaction product obtained is washed out with an organic solvent in order to remove adsorbed free secondary or tertiary aliphatic amine.

13. The process as claimed in claim 2 or 5, wherein the reaction product, which may contain excess starting material, is separated off, washed with water and dried, preferably in vacuo.

14. The use of the ammonium salts, substituted by organic substituents, of a crystalline silicic acid having a laminar structure as claimed in claim 1 as an oil-binding substance.

15. An ammonium salt, substituted by organic substituents, of a crystalline silicic acid having a laminar structure as claimed in claim 1, in which x is a number between 0.1 and 0.8, in particular between 0.15 and 0.6, preferably 0.3 and 0.4.

## Revendications

1. Sels d'ammonium à substituants organiques d'un acide silicique cristallisé à phyllostructure, ou structure stratifiée, de formule $H_2Si_2O_5$, caractérisés en ce qu'ils s'agit de composés de formule :

$$(Q_xM_yH_z)_2Si_2O_5 \cdot m\ H_2O$$

dans laquelle
- m     est un nombre de 0 à 10,
- z      un nombre inférieur à 1,
- y      un nombre inférieur à 1 et
- x      un nombre inférieur à 1 mais supérieur à 0,

la somme $(x + y + z) = 1$,
- M     désigne $Li^+$, $Na^+$, $K^+$ ou $NH_4^+$ et
- Q     est un cation $(NR^1R^2R^3R^4)^+$,

$R^1$ et $R^2$ étant indépendamment l'un de l'autre des alkyles avec de 6 à 20 atomes de carbone et $R^3$ et $R^4$, indépendamment l'un de l'autre, l'hydrogène, des alkyles ayant de 1 à 22 atomes de carbone, des hydroxyalkyles ayant de 2 à 20 atomes de carbone, le groupe benzyle, des alcoxyéthyles ayant de 1 à 20 atomes de carbone dans le groupe alcoxy, des alkylphénoxyéthyles ayant de 1 à 10 atomes de carbone pour le groupe alkyle ou encore des alkylaryles à alkyle ayant de 1 à 10 atomes de carbone.

2. Procédé de préparation des sels d'ammonium d'acide silicique selon la revendication 1 par réaction de sels alcalins de cet acide en phase aqueuse avec des sels d'amines aliphatiques, procédé caractérisé en ce que l'on fait réagir 1 Mol d'un phyllosilicate de métal alcalin cristallisé de formule générale $M_2Si_2O_5$ avec de 0,2 à 20 Mol, de préférence de 0,5 à 7 Mol, d'un sel d'une amine aliphatique secondaire ou tertiaire, M ayant la signification donnée à la revendication 1.

3. Procédé selon la revendication 2, caractérisé en ce que l'on fait réagir un sel de formule $(NR^1R^2R^3H)^+X^-$, $R^1$, $R^2$ et $R^3$ ayant les significations données à la revendication 1 et X désignant un anion.

4. Procédé selon la revendication 2, caractérisé en ce que l'on effectue la réaction en solution aqueuse à un pH de 7 à 10.

5. Procédé de préparation de sels d'ammonium d'acide silicique selon la revendication 1 par réaction de sels alcalins d'un acide silicique cristallisé à phyllostructure, en phase aqueuse, avec le sel d'une base d'ammonium quaternaire, procédé caractérisé en ce que l'on fait réagir 1 Mol d'un phyllosilicate alcalin cristallisé de formule $M_2Si_2O_5$ avec de 0,2 à 20 Mol, de préférence de 0,5 à 7 Mol, d'un sel d'ammonium quaternaire ayant 4 substituants aliphatiques, M ayant la signification donnée à la revendication 1.

**6.** Procédé selon la revendication 2, caractérisé en ce que le sel d'ammonium quaternaire est un sel de formule $(NR^1R^2R^3R^4)^+X^-$, $R^1$, $R^2$, $R^3$ et $R^4$ étant des radicaux aliphatiques tels que définis à la revendication 1 et X un anion.

**7.** Procédé selon la revendication 6, caractérisé en ce que $R^3$ et $R^4$ sont indépendamment l'un de l'autre des alkyles ayant de 1 à 4 atomes de carbone.

**8.** Procédé selon la revendication 7, caractérisé en ce que le sel d'ammonium est un sel de formule $(NR^1_2R^3_2)^+X^-$.

**9.** Procédé selon la revendication 6, caractérisé en ce que $R^3$ et $R^4$ sont des groupes méthyle.

**10.** Procédé de préparation de sels d'ammonium à substituants organiques selon la revendication 1, caractérisé en ce que l'on fait réagir une unité molaire d'un acide silicique cristallisé à phyllostructure de formule générale $H_2Si_2O_5$ avec de 0,2 à 20 Mol, de préférence de 0,5 à 7 Mol, d'une amine aliphatique secondaire ou tertiaire libre.

**11.** Procédé selon la revendication 10, caractérisé en ce que l'on fait réagir une amine de formule $NR^1R^2R^3$, les divers symboles ayant les significations données à la revendication 1.

**12.** Procédé selon la revendication 2, caractérisé en ce qu'on lave le produit de réaction obtenu avec un solvant organique pour en éliminer l'amine aliphatique libre qui a été adsorbée.

**13.** Procédé selon la revendication 2 ou 5, caractérisé en ce que l'on sépare le produit de réaction pouvant contenir éventuellement un excès de la matière de départ puis on le lave à l'eau et on le sèche, de préférence sous vide.

**14.** L'emploi des sels d'ammonium à substituants organiques d'un acide silicique cristallisé à phyllostructure selon la revendication 1 pour lier des matières huileuses.

**15.** Sels d'ammonium à substituants organiques selon la revendication 1, caractérisés en ce que x est un nombre de 0,1 à 0,8, en particulier de 0,15 à 0,6 et de préférence de 0,3 à 0,4.